# EUROPEAN PATENT APPLICATION

(11) **EP 4 764 474 A1**
(43) Date of publication of application: **24.06.2026**
(21) Application number: 25216519.6
(22) Date of filing: 18.11.2025
(51) Int. Cl.: G01N 23/046, G01B 15/02, G01B 15/04

(54) **METHOD FOR SCANNING A COMPONENT**

(30) Priority: 18.12.2024 GB 202418551
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method (200) for scanning a component (50, 55) having one or more regions of interest (52) includes disposing at least one element (60) adjacent to and at least partially engaging the one or more regions of interest (52) of the component (50, 55). The component (50, 55) has an aspect ratio (AR1) that is higher than an aspect ratio (AR2) of the at least one element (60). The method (200) further includes providing an imaging beam source (108) and an imaging beam receiver (114); generating, via the imaging beam source (108), an imaging beam (110) that passes through the component (50, 55) and the at least one element (60); receiving the imaging beam (110) at the imaging beam receiver (114); and generating, via the imaging beam receiver (114), an image (116).

## Description

### FIELD

This disclosure relates to scanning a component, and in particular, to a method for scanning a component.

### BACKGROUND

X-ray scans such as computed tomography (CT) scans are conventionally used in industry for detecting defects such as voids, cracks, and inclusions, based on differences in X-ray absorption in these regions. CT techniques can also be used for investigative work on subjects such as aerofoil blades, and in particular, turbine blades of gas turbine engines. Generally, during a CT scan, x-ray beams that are generated by an x-ray source penetrate the subject to be scanned. The x-ray beam, after being attenuated by different densities of material within the subject, impinges upon an array of radiation detectors. The array of radiation detectors produces electrical signals indicative of the attenuated x-ray beam, thereby generating an x-ray image.

A three-dimensional CT scan creates a scan of the entire scan volume. A component (i.e., object of interest) is separated from a background by surface segmentation. Conventionally, thresholding algorithms mathematically fit a region of interest of the component to the scan. The accuracy of the thresholding step determines dimensional accuracy of the scan data, especially flatness or curvature of the region of interest. For calibration of CT parameters, reference data is required which is usually generated using an independent scanning method. Conventionally, for example, reference data is extracted using an alternative measurement method such as coordinate measurement, while cutting the component open to reveal non-line of sight surfaces or regions of interest.

Conventional algorithms for calibrating CT parameters involve a laborious task which depends on a material of the component, a geometry of the component, and other variables. Thus, conventional algorithms may not achieve the right threshold parameters to get accurate dimensional measurements of the scan data. Moreover, for components with intricate or delicate internal features, destructive techniques such as cutting the component open to use line of sight measurement methods to generate reference data may not be a feasible solution.

Furthermore, while scanning a component having high aspect ratio by three-dimensional CT, it may be difficult to clearly identify a transition from the component to a background in a scanned image captured by CT. In other words, high aspect ratio component or high aspect ratio areas of a component appears to have a low greyscale value or would appear to be darker in the scanned image. This is due to the reason that the scanned image of the component may have artifacts, such as beam hardening, scattering, ring artefact, concave wall effect, or any other non-linear artefact. Such artefacts, especially beam hardening, are generally caused because in practical applications, polychromatic x-ray source is used in three-dimensional CT scanning which provides both low energy rays as well as high energy rays penetrating the component. However, low energy x-rays may not completely penetrate through the longest dimension of the component in the direction of travel of the x-rays.

In CT scanning, reconstruction algorithms assume that longer the path length, more the x-ray attenuation. This is true only for a monochromatic x-ray source. In a polychromatic x-ray source, the weaker x-rays attenuate over relatively shorter path length increasing the attenuation more than anticipated by the linear assumption. Hence, such areas of the part appear denser than it is. The remaining hard x-rays are less likely to attenuate, hence, the material along the longer paths appear less dense than it actually is. This is called beam hardening and is the most common or dominant cause for the non-linear artefacts in a CT scan. As the part is imaged from different orientations the x-rays passing through a specific location in the part have to pass through different x-ray path lengths, each predicting a different density at the same location which causes the error in the greyscale value in the reconstructed volume causing the non-linear artefacts called by different names in the literature such as metal artefacts, beam hardening, and the like. A monochromatic x-ray source does not suffer from beam hardening but can still have the other sources of error that cause the non-linear artefact. In a high aspect ratio part or region of a part, the difference in the pathlength of x-rays is higher making the artefacts worse. Depending on the reconstruction algorithm used, the severity of the artefact can vary.

Hence, due to above-mentioned limitations, conventional techniques of three-dimensional CT may not provide a desirable scan quality of one or more components. Further, the conventional techniques of three-dimensional CT may not be very helpful to get accurate dimensional measurements and precise inspection of one or more components.

### SUMMARY

According to a first aspect, a method for scanning a component having one or more regions of interest is provided. The method includes disposing at least one element adjacent to and at least partially engaging the one or more regions of interest of the component. The component has an aspect ratio that is higher than an aspect ratio of the at least one element. The method further includes providing an imaging beam source and an imaging beam receiver, such that the component and the at least one element are placed between the imaging beam source and the imaging beam receiver. The method further includes generating, via the imaging beam source, an imaging beam that passes through the component and the at least one element. The method further includes receiving the imaging beam at the imaging beam receiver. The method further includes generating, via the imaging beam receiver, an image in response to receiving the imaging beam. The image depicts a contrast between the at least one element and the one or more regions of interest of the component due to lower aspect ratio of the at least one element than that of the component.

As the aspect ratio of the component is higher than the aspect ratio of the at least one element, the one or more regions of interest of the component may be isolated with a desirable accuracy. In other words, it may be easy for edge or surface detection algorithms to clearly identify a transition from the one or more regions of interest of the component to the at least one element in a scanned image provided by the method of the present disclosure. In the image, the element having the relatively lower aspect ratio would appear to be brighter that means higher apparent density, and the component having the relatively higher aspect ratio would appear to be darker that means lower apparent density. This creates the contrast between the at least one element and the one or more regions of interest of the component.

Such difference in aspect ratios of the component and the at least one element may lead to enhancement of detectability of the one or more regions of interest of the component. Detectability refers to ability to locate a surface as the transition between the component and the at least one element. Enhancement of detectability of the one or more regions of interest of the component may further lead to improved dimensional accuracy of the scan data, especially flatness or curvature of the one or more regions of interest. Improved dimensional accuracy of the scan data may enable accurate detection and inspection of open cracks, voids (in case of small sized components), wall thickness, or other features in the one or more regions of interest of the component. Therefore, as compared to conventional techniques for detection or investigation of a surface, the method of the present disclosure may provide an improved technique for enhancement of detectability of the one or more regions of interest of the component without using any thresholding algorithm.

As the image generated by the method of the present disclosure depicts the contrast between the at least one element and the one or more regions of interest of the component, the one or more regions of interest of the component may be easily distinguished, which otherwise appear to be darker and of low greyscale value while scanning the component in isolation using conventional scanning techniques. In conventional methods, it is difficult to register a surface as the boundary between the component and the background due to insufficient contrast difference. Hence, the image provided by the method of the present disclosure may have minimal effect of artefacts, such as beam hardening, scattering, ring artefact, or concave wall effect. As the element is in contact with the component, the disclosed method may help various algorithms to identify the one or more regions of interest. In industrial applications, such method may be helpful to get accurate dimensional measurements and precise inspection of one or more components.

In some embodiments, the at least one element is removably coupled to the component. The at least one element may be removably coupled to the component by using or more fasteners, an adhesive, a magnetic coupling, or a snap fit engagement. The removable coupling of the at least one element to the component may facilitate inspection of the one or more regions of interest of the component. After the component and the at least one element are scanned, the at least one element can be subsequently decoupled from the component. The at least one element may be a button or a bead that is temporarily attached to the component for scanning purposes.

In some embodiments, the at least one element is fixedly coupled to the component. The at least one element may be fixedly coupled to the component by welding or the like joining technique. The at least one element may be designed into the component to enhance the measurement capability. The fixed coupling of the at least one element to the component may facilitate inspection of the one or more regions of interest of the component. The at least one element may be a button or a pedestal that is permanently attached to the component for scanning purposes without affecting the intended function of the component.

In some embodiments, the at least one element is integral with the component, such that the at least one element extends from the component. The at least one element and the component may be manufactured together from a single casting. In some cases, the at least one element may be considered as a feature having a relatively lower aspect ratio and the component may be considered as another feature having a relatively higher aspect ratio.

In some embodiments, the at least one element provides a higher attenuation of the imaging beam than the component. The higher attenuation of the imaging beam by the at least one element creates the contrast between the at least one element and the one or more regions of interest of the component in the image, thereby, enhancing detectability of the one or more regions of interest of the component.

In some embodiments, the at least one element and the component are made of the same material. The at least one element and the component may be made of the same metal alloy or the same metal. Therefore, even though the at least one element and the component are made of the same material, the at least one element having the relatively lower aspect ratio would appear at a higher contrast in the image because of its geometry.

In some embodiments, the at least one element includes a single magnetic element. In applications where the component is made of a ferromagnetic material or a ferrimagnetic material, such as iron, steel, nickel, cobalt, and the like, the single magnetic element may be a magnet configured to attract the component. The single magnetic element may flush and align with the one or more regions of interest of the component so that the one or more regions of interest of the component may be easily located or detected with the desirable accuracy. This may help to register a clear transition between the component and the at least one element.

In some embodiments, the one or more regions of interest of the component include a first region of interest and a second region of interest opposite to the first region of interest. The first region of interest and the second region of interest of the component may include two opposite surfaces or walls of the component. **In** some applications, the one or more regions of interest of the component may include three or more regions of interest.

In some embodiments, the at least one element includes a first magnetic element disposed adjacent to and at least partially engaging the first region of interest, and a second magnetic element disposed adjacent to and at least partially engaging the second region of interest. Both the first magnetic element and the second magnetic element may be magnets, with opposite poles facing each other so that the first magnetic element and the second magnetic element attract each other and engage with the respective first region of interest and the second region of interest. With such arrangement, the first region of interest and the second region of interest of the component may be easily isolated or detected with the desirable accuracy. In applications where the component is made of a non-magnetic material such as brass, plastic, ceramic, gold, silver, and the like, the at least one element may include the first magnetic element, and the second magnetic element disposed opposite to each other.

In some embodiments, the method further includes determining a shortest distance between the first magnetic element and the second magnetic element in a scanned image to calculate a dimension of the component between the first region of interest and the second region of interest. As each of the first magnetic element and the second magnetic element has the lower aspect ratio than that of the component, these elements would appear as relatively higher contrast features in the scanned image. Due to relatively higher contrast features and relatively higher greyscale values, the shortest distance between the first magnetic element and the second magnetic element can be determined accurately. In this manner, the dimension of the component between the first region of interest and the second region of interest can also be calculated. The dimension of the component may be a thickness, a width, or a length of the component.

In some embodiments, the at least one element includes a magnetic element disposed adjacent to and at least partially engaging the first region of interest, and a metallic element disposed adjacent to and at least partially engaging the second region of interest. The metallic element is configured to be attracted by the magnetic element. The metallic element may be made of a ferromagnetic material or a ferrimagnetic material, such as iron, steel, nickel, cobalt, and the like, and the magnetic element may be a magnet configured to attract the metallic element. In applications where the component is a made of a non-magnetic material such as brass, plastic, ceramic, gold, silver, and the like, the at least one element includes the magnetic element, and the metallic element disposed opposite to each other.

In some embodiments, the method further includes determining a shortest distance between the magnetic element and the metallic element in a scanned image to calculate a dimension of the component between the first region of interest and the second region of interest. As each of the magnetic element and the metallic element has the lower aspect ratio than that of the component, these elements would appear as relatively higher contrast features in the scanned image. Due to relatively higher contrast features and relatively higher greyscale values (i.e., higher apparent density), the shortest distance between the magnetic element and the metallic element can be determined accurately. In this manner, the dimension of the component between the first region of interest and the second region of interest can also be calculated. The dimension of the component may be a thickness, a width, or a length of the component.

In some embodiments, the at least one element includes a magnetic element disposed adjacent to and at least partially engaging the first region of interest, and a magnetic fluid contacting the second region of interest. The magnetic element may be a magnet configured to attract the magnetic fluid. The magnetic fluid may be a colloidal mixture of nano-size magnetic particles covered by a surfactant. The magnetic fluid may be a ferrofluid, a paramagnetic solution, or a combination thereof. In applications where the one or more regions of interest of the component are in intricate or complex regions, or inside a cavity of the component, the magnetic fluid may flow into such tight regions, and therefore, be attracted towards the magnetic element. In such applications, the component may be made of a non-magnetic material such as brass, plastic, ceramic, gold, silver, and the like.

In some embodiments, the method further includes determining a shortest distance between the magnetic element and the magnetic fluid in a scanned image to calculate a dimension of the component between the first region of interest and the second region of interest. As each of the magnetic element and the magnetic fluid has the lower aspect ratio than that of the component, these elements would appear as relatively higher contrast features in the image. Due to relatively higher contrast features and relatively higher greyscale values, the shortest distance between the magnetic element and the magnetic fluid can be determined accurately. In this manner, the dimension of the component between the first region of interest and the second region of interest can also be calculated. The dimension of the component may be a thickness, a width, or a length of the component.

In some embodiments, the first region of interest is a first edge of the component, and the second region of interest is a second edge of the component opposite to the first edge of the component. The two opposite edges of the component can be easily identified and investigated in the scanned image because of different aspect ratios of the component and the at least one element engaging with each of the first edge and the second edge. By identifying the first edge and the second edge, a corresponding dimension of the component between the first edge and the second edge may also be calculated accurately.

In some embodiments, the method further comprises applying a contrast agent to the at least one element. A material of the contrast agent has an attenuation coefficient that is greater than an attenuation coefficient of a material of the component. As the attenuation coefficient of the material of the contrast agent is greater than the attenuation coefficient of the material of the component, the one or more regions of interest may be isolated with a desirable accuracy. For example, in some applications, the one or more regions of interest may be isolated with an accuracy of about one voxel or two voxels without any need of conventional thresholding algorithms. The application of the contrast agent of such attenuation coefficient to the at least one element may lead to enhancement of detectability of the one or more regions of interest of the component. In some other embodiments, both the at least one element and the one or more regions of interest of the component may be coated with a contrast agent. In other embodiments, only the one or more regions of interest of the component may be coated with a contrast agent.

In some embodiments, the method further comprises applying a contrast agent to the one or more regions of interest of the component. A material of the contrast agent may have an attenuation coefficient that is greater than an attenuation coefficient of a material of the at least one element.

In some embodiments, the contrast agent includes mercury, lead, platinum or an alloy thereof, or a resin embedded with a plurality of nanoparticles. Lead has the greatest attenuation coefficient out of these materials. Selection of the material of the contrast agent is based on desirable ratio of the attenuation coefficient of the material of the contrast agent to the attenuation coefficient of the material of the component. However, any material having the attenuation coefficient greater than the attenuation coefficient of the material of the component may be used by the method of the present disclosure. The attenuation coefficient may be an x-ray attenuation coefficient or any other electromagnetic radiation attenuation coefficient (e.g., gamma ray attenuation coefficient).

In some embodiments, the imaging beam source is an electromagnetic source, such as an x-ray source or a gamma-ray source. The imaging beam source is capable of emitting the imaging beam in the electromagnetic spectrum that can penetrate or be transmitted through a material after attenuation. The x-ray source may be one of a reflective x-ray source or a transmissive x-ray source. The reflective x-ray source uses a thick target (anode) and the electron energy is sufficiently low whereas the transmissive x-ray source uses a thin target (anode) and the electron energy is relatively high.

In some embodiments, the component is a component of a gas turbine engine. In some embodiments, the component may be a turbine blade or a compressor blade of a gas turbine engine. Therefore, the method of the present disclosure may be used for scanning and inspection of the turbine blade or the compressor blade for any damage or wear, or for checking the integrity of the turbine blade.

Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, in which:
**FIG. 1** shows a schematic sectional side view of a gas turbine engine;
**FIG. 2** is a schematic view of a scanning apparatus for scanning a component and at least one element, in accordance with an embodiment of the present disclosure;
**FIG. 3A** is a schematic view of an exemplary arrangement of a component and at least one element, in accordance with an embodiment of the present disclosure;
**FIG. 3B** is a greyscale plot of a scanned image of the arrangement of the component and the at least one element illustrated in FIG. 3A;
**FIG. 4** is a schematic view of an exemplary arrangement of a component and at least one element, in accordance with another embodiment of the present disclosure;
**FIG. 5** is a schematic view of an exemplary arrangement of a component and at least one element, in accordance with another embodiment of the present disclosure;
**FIG. 6** is a schematic view of an exemplary arrangement of a component and at least one element, in accordance with another embodiment of the present disclosure;
**FIG. 7** is a schematic view of an exemplary arrangement of a component and at least one element, in accordance with another embodiment of the present disclosure; and
**FIG. 8** is a flowchart of a method for scanning a component, in accordance with an embodiment of the present disclosure.

### DETAILED DESCRIPTION

Aspects and embodiments of the present disclosure will now be discussed with reference to the accompanying Figures. Further aspects and embodiments will be apparent to those skilled in the art.

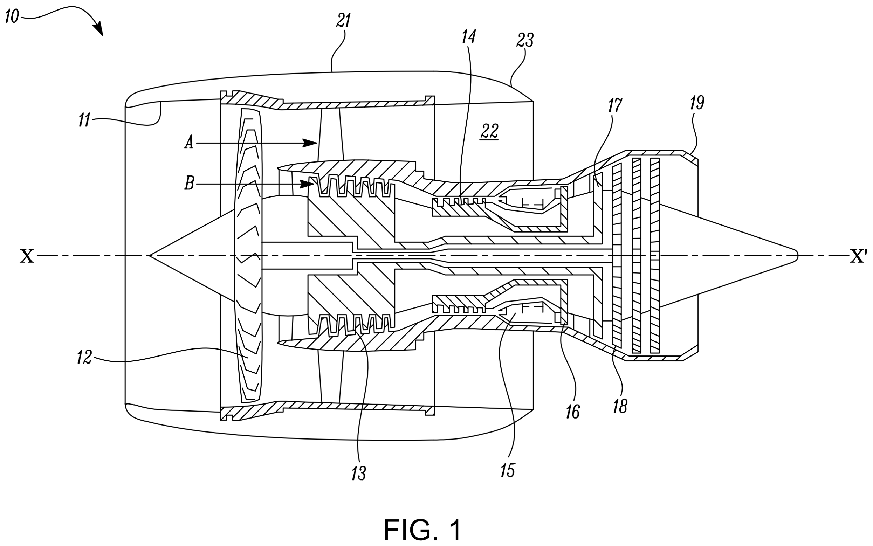

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

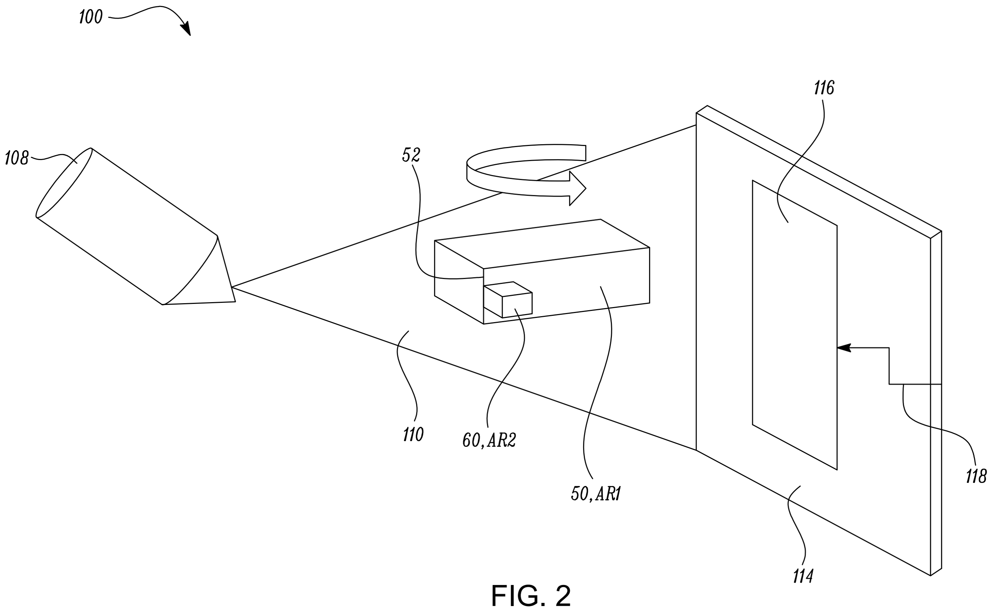

**FIG. 2** is a schematic view of a scanning apparatus 100 for scanning a component 50 having one or more regions of interest 52, according to an embodiment of the present disclosure. In some embodiments, the component 50 is a component of the gas turbine engine 10 shown in FIG. 1. In some embodiments, the component 50 may be a turbine blade or a compressor blade of the gas turbine engine 10. The component 50 is shown schematically in FIG. 2 for the purpose of illustration. Other shapes for the component 50 are foreseeable and could be used. In the illustrated embodiment of FIG. 2, only one component 50 is shown. However, the scanning apparatus 100 may be used for scanning two or more components together.

The scanning apparatus 100 may allow the component 50 to be scanned and a density of materials contained therein to be determined for various diagnostic and evaluation purposes. In general, CT scanning, e.g. 3DCT scanning or 2DCT slack scanning, generates a three-dimensional (3D) image of a test specimen by utilizing digital geometry processing of a series of two-dimensional (2D) x-ray images taken around a single axis of rotation or multiple axes of rotation.

In the scanning apparatus 100, at least one element 60 is disposed adjacent to and at least partially engaging the component 50. The component 50 has an aspect ratio AR1 that is higher than an aspect ratio AR2 of the at least one element 60. The at least one element 60 is shown schematically in FIG. 2 for the purpose of illustration. Other shapes for the at least one element 60 are foreseeable and could be used.

It should be noted that the aspect ratio AR1 of the component 50 and the aspect ratio AR2 of the at least one element 60 refers to their aspect ratios in the same plane as defined by the imaging beam 110. For an object to have a high aspect ratio, one or more axes of rotation and/or revolution pass radially through the object. In general, the aspect ratio may be defined as the variation in imaging beam pathlength at a given point in an object as the object rotates or revolves about one or more axes while being scanned from different orientations.

The scanning apparatus 100 includes an imaging beam source 108 configured to generate an imaging beam 110 that passes through the component 50 and the at least one element 60. In some embodiments, the imaging beam source 108 is an electromagnetic source, such as an x-ray source or a gamma-ray source. The imaging beam source 108 is capable of emitting the imaging beam 110 in the electromagnetic spectrum that can penetrate or be transmitted through a material after attenuation. The x-ray source may be one of a reflective x-ray source or a transmissive x-ray source. The reflective x-ray source uses a thick target (anode) and the electron energy is sufficiently low whereas the transmissive x-ray source uses a thin target (anode) and the electron energy is relatively high. In some embodiments, the x-ray source may include, for example, an x-ray tube (not shown) that produces x-rays by accelerating electrons through an electric field. In some embodiments, the electric field may be established by means of a voltage provided to the imaging beam source 108 by a high voltage power supply (not shown). The emitted x-rays may be further processed to generate the x-ray cone beam (i.e., the imaging beam 110) or fan beam.

Further, the scanning apparatus 100 includes an imaging beam receiver 114 configured to receive the imaging beam 110, such that the component 50 and the at least one element 60 are placed between the imaging beam source 108 and the imaging beam receiver 114. The imaging beam receiver 114 is configured to generate an image 116 in response to receiving the imaging beam 110. Specifically, the imaging beam receiver 114 is configured to generate a signal 118 in response to receiving the imaging beam 110. In some embodiments, the imaging beam receiver 114 may be an energy differentiating detector.

The image 116 depicts a contrast between the at least one element 60 and the one or more regions of interest 52 of the component 50 due to lower aspect ratio of the at least one element 60 than that of the component 50. Due to relatively lower aspect ratio of the at least one element 60, the at least one element 60 provides a higher attenuation of the imaging beam 110 than the component 50.

As the aspect ratio AR1 of the component 50 is higher than the aspect ratio AR2 of the at least one element 60, the one or more regions of interest 52 of the component 50 may be isolated with a desirable accuracy. In other words, it may be easy for edge or surface detection algorithms to clearly identify a transition from the one or more regions of interest 52 of the component 50 to the at least one element 60 in a scanned image acquired by the scanning apparatus 100. In the image 116, the at least one element 60, due to its relatively lower aspect ratio AR2, would appear to be brighter, and the component 50, due to its relatively higher aspect ratio AR1, would appear to be darker, which creates the contrast between the at least one element 60 and the one or more regions of interest 52 of the component 50.

Such difference in respective aspect ratios AR1, AR2 of the component 50 and the at least one element 60 may lead to enhancement of detectability of the one or more regions of interest 52 of the component 50. Enhancement of detectability of the one or more regions of interest 52 of the component 50 may further lead to improved dimensional accuracy of the scan data, especially flatness or curvature of the one or more regions of interest 52. Improved dimensional accuracy of the scan data may enable accurate detection and inspection of small cracks, voids, or other features in the one or more regions of interest 52 of the component 50. Therefore, as compared to conventional techniques for detection or investigation of a surface, the scanning apparatus 100 may provide an improved technique for enhancement of detectability of the one or more regions of interest 52 of the component 50 without using any thresholding algorithm.

As the image 116 generated by the scanning apparatus 100 depicts the contrast between the at least one element 60 and the one or more regions of interest 52 of the component 50, the one or more regions of interest 52 of the component 50 may be easily distinguished, which otherwise appear to be darker and of low greyscale value while scanning the component 50 in isolation using conventional scanning techniques. Hence, the image 116 may have minimal effect of artefacts, such as beam hardening, scattering, ring artefact, or concave wall effect. Such artefacts may otherwise be noticed while scanning the component 50 without positioning the at least one element 60 adjacent thereto and at least partially engaging therewith. Therefore, the scanning apparatus 100 may provide a desirable scan quality of the component 50 so as to identify the one or more regions of interest 52 thereof. In industrial applications, this may be helpful to get accurate dimensional measurements and precise inspection of one or more components.

In some embodiments, the at least one element 60 is removably coupled to the component 50. The at least one element 60 may be removably coupled to the component 50 by using or more fasteners, an adhesive, or a snap fit engagement. The removable coupling of the at least one element 60 to the component 50 may facilitate inspection of the one or more regions of interest 52 of the component 50. After the component 50 and the at least one element 60 are scanned, the at least one element 60 can be subsequently decoupled from the component 50. The at least one element 60 may be a button or a bead that is temporarily attached to the component 50 for scanning purposes.

In some embodiments, the at least one element 60 is fixedly coupled to the component 50. The at least one element 60 may be fixedly coupled to the component 50 by welding or the like joining technique. The fixed coupling of the at least one element 60 to the component 50 may facilitate inspection of the one or more regions of interest 52 of the component 50. The at least one element 60 may be a button or a pedestal that is permanently attached to the component 50 for scanning purposes without affecting the intended function of the component 50.

In some embodiments, the at least one element 60 is integral with the component 50, such that the at least one element 60 extends from the component 50. The at least one element 60 and the component 50 may be manufactured together from a single casting. In some cases, the at least one element 60 may be considered as a feature having a relatively lower aspect ratio and the component 50 may be considered as another feature having a relatively higher aspect ratio.

In some embodiments, the at least one element 60 and the component 50 are made of the same material. The at least one element 60 and the component 50 may be made of the same metal alloy or the same metal. Therefore, even though the at least one element 60 and the component 50 are made of the same material, the at least one element 60 having the relatively lower aspect ratio would appear at a higher contrast in the image 116 because of its geometry.

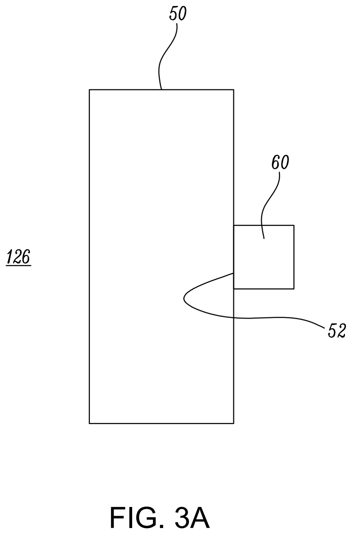

**FIG. 3A** is a schematic view of an exemplary arrangement of the component 50 and the at least one element 60, in accordance with an embodiment of the present disclosure. In the illustrated embodiment of FIG. 3A, the at least one element 60 includes a single element 60. In some embodiments, the at least one element 60 includes a single magnetic element. In applications where the component 50 is made of a ferromagnetic material or a ferrimagnetic material, such as iron, steel, nickel, cobalt, and the like, the single magnetic element may be a magnet configured to attract the component 50. The single magnetic element may flush and align with the one or more regions of interest 52 of the component 50 so that the one or more regions of interest 52 of the component 50 may be easily isolated or detected with the desirable accuracy.

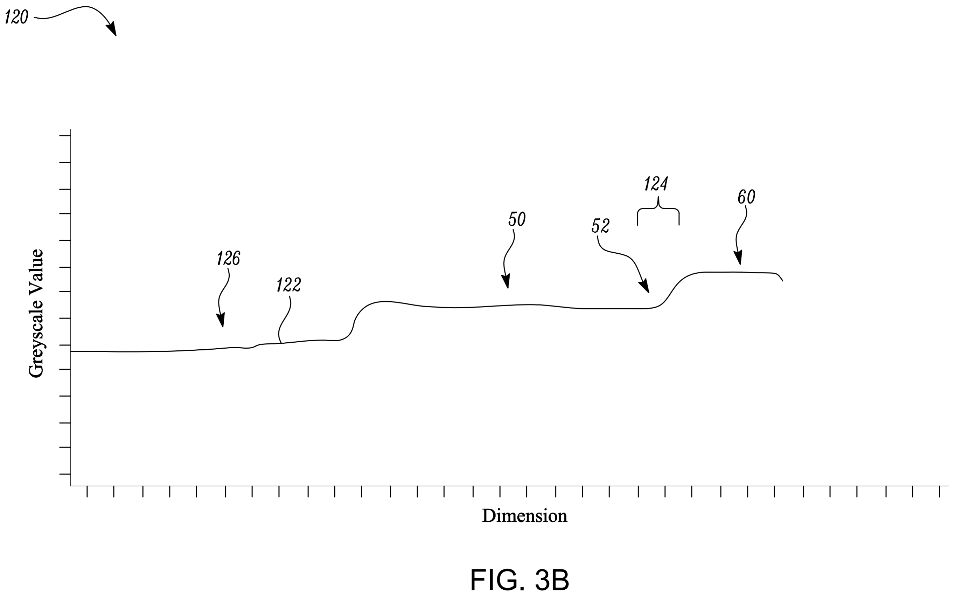

**FIG. 3B** is a greyscale plot 120 of a scanned image (not shown) of the arrangement of the component 50 and the at least one element 60 illustrated in FIG. 3A. It should be noted that in a scanned image of an object, region with a relatively lower aspect ratio may appear bright, as this region attenuates or absorbs an imaging beam at a higher rate than other regions. Therefore, in a scanned image (not shown) of the exemplary arrangement shown in FIG. 3A, the at least one element 60 would appear brighter than the component 50 and a background 126, and the component 50 would appear brighter than the background 126.

The greyscale plot 120 shows a one-dimensional plot of the greyscale values along a dimension. The dimension of the component 102 is shown in the abscissa in arbitrary units and the greyscale values are shown in the ordinate. Higher greyscale value denotes more shade of white. The greyscale plot 120 shows a curve 122 traversing through the background 126, the component 50, and the at least one element 60.

It can be seen in the greyscale plot 120 that the curve 122 shows a region 124 where there is a sharp rise in greyscale values. This region 124 depicts the transition between the at least one element 60 and the one or more regions of interest 52 of the component 50. This may facilitate an identifiable transition from the component 50 to the at least one element 60. In other words, by disposing the at least one element 60 adjacent to and at least partially engaging the one or more regions of interest 52 of the component 50, accurate edge or surface detection of the component 50 may be obtained. In this way, a region of interest of the component 50 may be easily isolated or detected with the desirable accuracy based on attenuation of the imaging beam 110 (i.e., x-rays) on the greyscale plot 126.

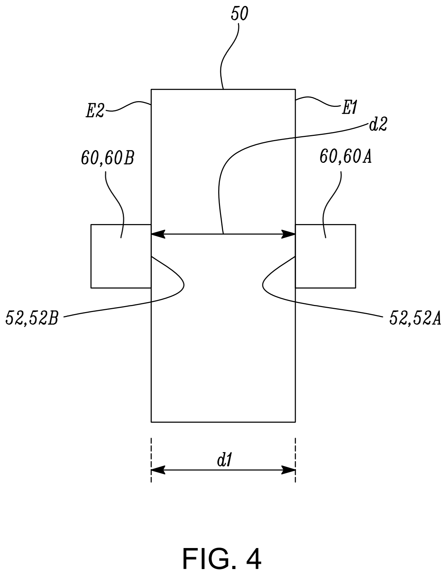

**FIG. 4** is a schematic view of an exemplary arrangement of the component 50 and the at least one element 60, in accordance with another embodiment of the present disclosure. In the illustrated embodiment of FIG. 4, the one or more regions of interest 52 of the component 50 include a first region of interest 52A and a second region of interest 52B opposite to the first region of interest 52A. The first region of interest 52A and the second region of interest 52B of the component 50 may include two opposite surfaces or walls of the component 50. In the illustrated embodiment of FIG. 4, the first region of interest 52A is a first edge E1 of the component 50, and the second region of interest 52B is a second edge E2 of the component 50 opposite to the first edge E1 of the component 50. By identifying the first edge E1 and the second edge E2 in a scanned image (not shown), a corresponding dimension of the component 50 between the first edge E1 and the second edge E2 may also be calculated accurately.

Further, the at least one element 60 includes a first magnetic element 60A disposed adjacent to and at least partially engaging the first region of interest 52A, and a second magnetic element 60B disposed adjacent to and at least partially engaging the second region of interest 52B. Both the first magnetic element 60A and the second magnetic element 60B may be magnets, with opposite poles facing each other so that the first magnetic element 60A and the second magnetic element 60B attract each other and engage with the respective first region of interest 52A and the second region of interest 52B. With such arrangement, the first region of interest 52A and the second region of interest 52B of the component 50 may be easily isolated or detected with the desirable accuracy. In applications where the component 50 is a made of a non-magnetic material such as brass, plastic, ceramic, gold, silver, and the like, the at least one element 60 may include the first magnetic element 60A, and the second magnetic element 60B disposed opposite to each other.

In a scanned image of the arrangement illustrated in FIG. 4, a shortest distance d2 between the first magnetic element 60A and the second magnetic element 60B is determined to calculate a dimension d1 of the component 50 between the first region of interest 52A and the second region of interest 52B. As each of the first magnetic element 60A and the second magnetic element 60B has the lower aspect ratio than that of the component 50, these elements would appear as relatively higher contrast features in the scanned image. Due to relatively higher contrast features and relatively higher greyscale values, the shortest distance d2 between the first magnetic element 60A and the second magnetic element 60B can be determined accurately. In this manner, the dimension d1 of the component 50 between the first region of interest 52A and the second region of interest 52B can also be calculated. In some embodiments, the dimension d1 of the component 50 may be a thickness, a width, or a length of the component 50.

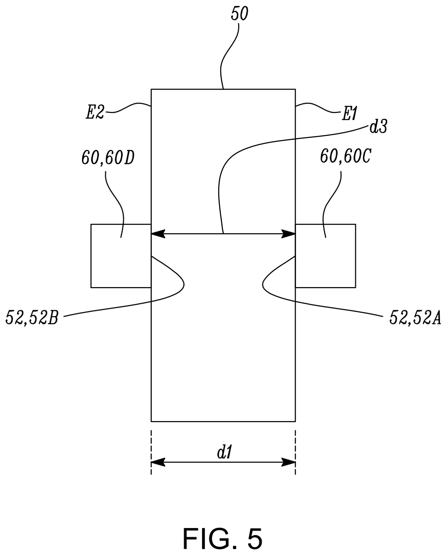

**FIG. 5** is a schematic view of an exemplary arrangement of the component 50 and the at least one element 60, in accordance with another embodiment of the present disclosure. The exemplary arrangement shown in FIG. 5 is substantially similar to the exemplary arrangement shown in FIG. 4, with common components being referred to by the same numerals. However, in the exemplary arrangement of FIG. 5, the at least one element 60 includes a magnetic element 60C disposed adjacent to and at least partially engaging the first region of interest 52A, and a metallic element 60D disposed adjacent to and at least partially engaging the second region of interest 52B. The metallic element 60D is configured to be attracted by the magnetic element 60C. The metallic element 60D may be made of a ferromagnetic material or a ferrimagnetic material, such as iron, steel, nickel, cobalt, and the like, and the magnetic element 60C may be a magnet configured to attract the metallic element 60D. In applications where the component 50 is a made of a non-magnetic material such as brass, plastic, ceramic, gold, silver, and the like, the at least one element 60 includes the magnetic element 60C, and the metallic element 60D disposed opposite to each other.

In a scanned image (not shown) of the arrangement illustrated in FIG. 5, a shortest distance d3 between the magnetic element 60C and the metallic element 60D is determined to calculate the dimension d1 of the component 50 between the first region of interest 52A and the second region of interest 52B. As each of the magnetic element 60C and the metallic element 60D has the lower aspect ratio than that of the component 50, these elements would appear as relatively higher contrast features in the scanned image. Due to relatively higher contrast features and relatively higher greyscale values, the shortest distance d3 between the magnetic element 60C and the metallic element 60D can be determined accurately.

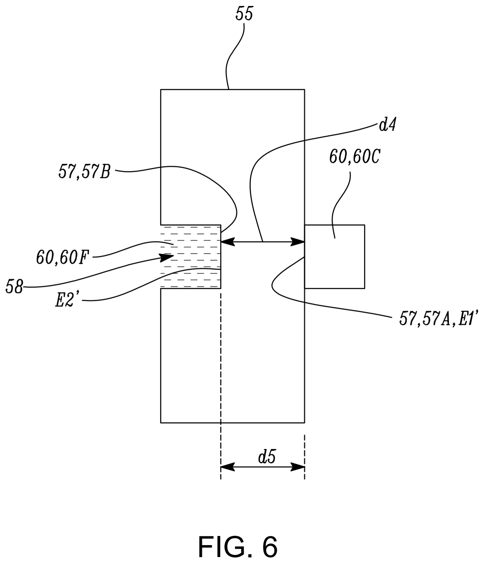

**FIG.** 6 is a schematic view of an exemplary arrangement of a component 55 and the at least one element 60, in accordance with another embodiment of the present disclosure. The component includes one or more regions of interest 57. In the illustrated embodiment of FIG. 6, the one or more regions of interest 57 of the component 50 include a first region of interest 57A and a second region of interest 57B opposite to the first region of interest 57A. The first region of interest 57A and the second region of interest 57B of the component 55 may include two opposite surfaces or walls of the component 55. In the illustrated embodiment of FIG. 6, the first region of interest 57A is a first edge E1' of the component 55, and the second region of interest 57B is a second edge E2' of the component 55 opposite to the first edge E1' of the component 55. By identifying the first edge E1' and the second edge E2' in a scanned image (not shown) of the arrangement of FIG. 6, a corresponding dimension of the component 55 between the first edge E1' and the second edge E2' may also be calculated accurately. The component 55 includes a cavity 58 and the closed end of the cavity 58 defines the second region of interest 57B.

Further, as illustrated, the at least one element 60 includes the magnetic element 60C (also shown in FIG. 5) disposed adjacent to and at least partially engaging the first region of interest 57A, and a magnetic fluid 60F contacting the second region of interest 57B. The magnetic element 60C may be a magnet configured to attract the magnetic fluid 60F. The magnetic fluid 60F may be a colloidal mixture of nano-size magnetic particles covered by a surfactant. The magnetic fluid 60F may be a ferrofluid, a paramagnetic solution, or a combination thereof. In applications where the one or more regions of interest 57 of the component 55 are in intricate or complex regions, or inside a cavity of the component 55 or adjacent to a cavity of the component 55, the magnetic fluid 60F may flow into such tight regions, and therefore, be attracted towards the magnetic element 60C. In such applications, the component 55 may be made of a non-magnetic material such as brass, plastic, ceramic, gold, silver, and the like.

In the scanned image of the arrangement illustrated in FIG. 6, a shortest distance d4 between the magnetic element 60C and the magnetic fluid 60F is determined to calculate a dimension d5 of the component 55 between the first region of interest 57A and the second region of interest 57B. As each of the magnetic element 60C and the magnetic fluid 60F has the lower aspect ratio than that of the component 55, these elements would appear as relatively higher contrast features in the scanned image. Due to relatively higher contrast features and relatively higher greyscale values, the shortest distance d4 between the magnetic element 60C and the magnetic fluid 60F can be determined accurately.

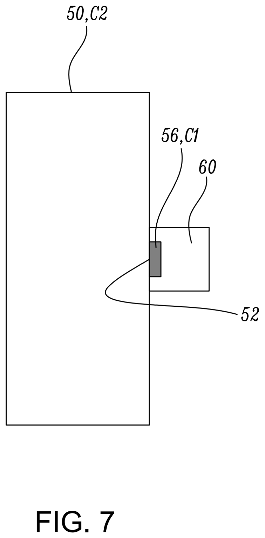

**FIG. 7** is a schematic view of an exemplary arrangement of the component 50 and the at least one element 60, in accordance with another embodiment of the present disclosure. The exemplary arrangement shown in FIG. 7 is substantially similar to the exemplary arrangement shown in FIG. 3A, with common components being referred to by the same numerals. However, in the exemplary arrangement of FIG. 7, the at least one element 60 includes a contrast agent 56 such that a region having the contrast agent 56 is disposed adjacent to and at least partially engaging the one or more regions of interest 52 of the component 50.

A material of the contrast agent 56 has an attenuation coefficient C1 that is greater than an attenuation coefficient C2 of a material of the component 50. As the attenuation coefficient C1 of the material of the contrast agent 56 is greater than the attenuation coefficient C2 of the material of the component 50, the one or more regions of interest 52 may be isolated with a desirable accuracy. For example, in some applications, the one or more regions of interest 52 may be isolated with an accuracy of about one voxel or two voxels without any need of conventional thresholding algorithms. The application of the contrast agent 56 of such attenuation coefficient C1 to the at least one element 60 may lead to enhancement of detectability of the one or more regions of interest 52 of the component 50.

In some embodiments, the contrast agent 56 is applied by coating the at least one element with the contrast agent 56. In some embodiments, the contrast agent 56 includes mercury, lead, platinum or an alloy thereof, or a resin embedded with a plurality of nanoparticles. Lead has the greatest attenuation coefficient out of these materials. Selection of the material of the contrast agent 56 is based on desirable ratio of the attenuation coefficient C1 of the material of the contrast agent 56 to the attenuation coefficient C2 of the material of the component 50. However, any material having the attenuation coefficient greater than the attenuation coefficient C2 of the material of the component 50 may be used.

In some other embodiments, both the at least one element 60 and the one or more regions of interest 52 of the component 50 may be coated with a contrast agent. In other embodiments, only the one or more regions of interest 52 of the component 50 may be coated with a contrast agent. The application of the contrast agent 56 of such attenuation coefficient C1 to the at least one element 60 may lead to enhancement of detectability of the one or more regions of interest 52 of the component 50.

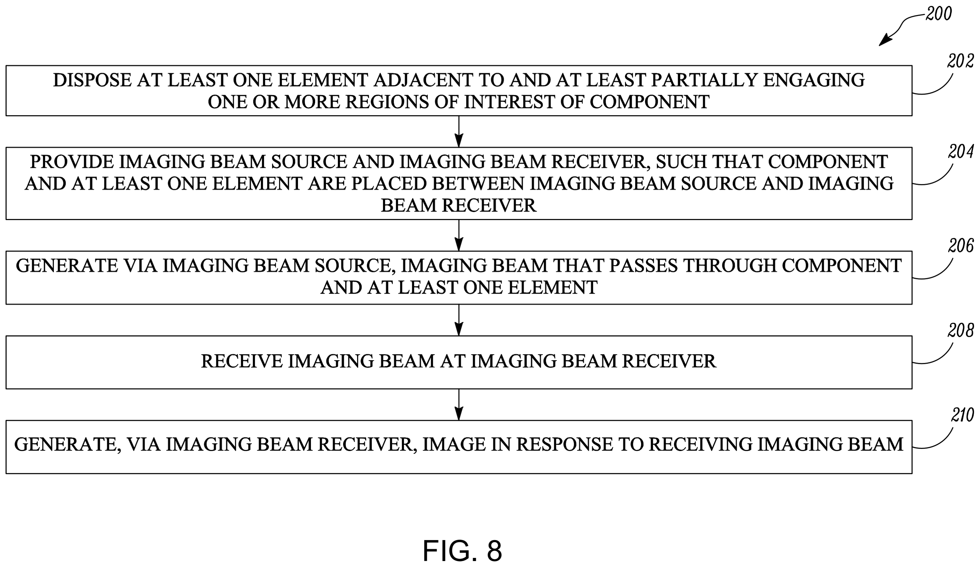

**FIG. 8** is a flowchart of a method 200 for scanning the component 50 shown in FIG. 2, in accordance with an embodiment of the present disclosure. The method 200 may be at least partly performed by the scanning apparatus 100 of FIG. 2. Referring to FIGS. 2 to 8, at step 202, the method 200 includes disposing the at least one element 60 adjacent to and at least partially engaging the one or more regions of interest 52 of the component 50. The at least one element 60 may be removably coupled to the component 50, or may be fixedly coupled to the component 50, or may be integral with the component 50.

At step 204, the method 200 further includes providing the imaging beam source 108 and the imaging beam receiver 114, such that the component 50 and the at least one element 60 are placed between the imaging beam source 108 and the imaging beam receiver 114. At step 206, the method 200 further includes generating, via the imaging beam source 108, the imaging beam 110 that passes through the component 50 and the at least one element 60. At step 208, the method 200 further includes receiving the imaging beam 110 at the imaging beam receiver 114. At step 210, the method 200 further includes generating, via the imaging beam source 108, an image 116 in response to receiving the imaging beam.

As the aspect ratio AR1 of the component 50 is higher than the aspect ratio AR2 of the at least one element 60, the one or more regions of interest 52 of the component 50 may be isolated with a desirable accuracy. In other words, it may be easy for edge or surface detection algorithms to clearly identify a transition from the one or more regions of interest 52 of the component 50 to the at least one element 60 in a scanned image provided by the method 200 of the present disclosure. In the image 116, the element 60 having the relatively lower aspect ratio AR2 would appear to be brighter, and the component 50 having the relatively higher aspect ratio AR1 would appear to be darker which creates the contrast between the at least one element 60 and the one or more regions of interest 52 of the component 50.

Such difference in aspect ratios of the component 50 and the at least one element 60 may lead to enhancement of detectability of the one or more regions of interest 52 of the component 50. Enhancement of detectability of the one or more regions of interest 52 of the component 50 may further lead to improved dimensional accuracy of the scan data, especially flatness or curvature of the one or more regions of interest 52. Improved dimensional accuracy of the scan data may enable accurate detection and inspection of small cracks, voids, or other features in the one or more regions of interest 52 of the component 50. Therefore, as compared to conventional methods for detection or investigation of a surface, the method 200 of the present disclosure may provide an improved technique for enhancement of detectability of the one or more regions of interest 52 of the component 50 without using any thresholding algorithm.

As the image 116 generated by the method 200 depicts the contrast between the at least one element 60 and the one or more regions of interest 52 of the component 50, the one or more regions of interest 52 of the component 50 may be easily distinguished, which otherwise appear to be darker and of low greyscale value while scanning the component 50 in isolation using conventional scanning techniques. Hence, the image 116 provided by the method 200 may have minimal effect of artefacts, such as beam hardening, scattering, ring artefact, or concave wall effect. Therefore, the method 200 may provide a desirable scan quality of the component 50 so as to identify the one or more regions of interest 52 thereof. In industrial applications, the method 200 may be helpful to get accurate dimensional measurements and precise inspection of one or more components.

Referring to FIGS. 4 and 8, the method 200 further includes determining the shortest distance d2 between the first magnetic element 60A and the second magnetic element 60B in a scanned image to calculate the dimension d1 of the component 50 between the first region of interest 52A and the second region of interest 52B.

Referring to FIGS. 5 and 8, the method 200 further includes determining the shortest distance d3 between the magnetic element 60C and the metallic element 60D in a scanned image to calculate the dimension d1 of the component 50 between the first region of interest 52A and the second region of interest 52B.

Referring to FIGS. 6 and 8, the method 200 further includes determining the shortest distance d4 between the magnetic element 60C and the magnetic fluid 60F in a scanned image to calculate the dimension d5 of the component 55 between the first region of interest 57A and the second region of interest 57B.

Referring to FIGS. 7 and 8, the method 200 further includes applying the contrast agent 56 to the at least one element 60. The material of the contrast agent 56 has the attenuation coefficient C1 that is greater than the attenuation coefficient C2 of the material of the component 50. In some embodiments, applying the contrast agent 56 to the at least one element 60 further includes coating the at least one element 60 with the contrast agent 56.

Alternatively, in other embodiments, the method 200 may include applying the contrast agent 60 to only the one or more regions of interest 52 of the component 50. Alternatively, in some other embodiments, the method 200 may include applying the contrast agent 60 to both the at least one element 60 and the one or more regions of interest 52 of the component 50.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (200) for scanning a component (50, 55) having one or more regions of interest (52, 57), the method (200) comprising:
disposing at least one element (60) adjacent to and at least partially engaging the one or more regions of interest (52, 57) of the component (50, 55), wherein the component (50, 55) has an aspect ratio (AR1) that is higher than an aspect ratio (AR2) of the at least one element (60);
providing an imaging beam source (108) and an imaging beam receiver (114), such that the component (50, 55) and the at least one element (60) are placed between the imaging beam source (108) and the imaging beam receiver (114);
generating, via the imaging beam source (108), an imaging beam (110) that passes through the component (50, 55) and the at least one element (60);
receiving the imaging beam (110) at the imaging beam receiver (114); and
generating, via the imaging beam receiver (114), an image (116) in response to receiving the imaging beam (110), the image (116) depicting a contrast between the at least one element (60) and the one or more regions of interest (52, 57) of the component (50, 55) due to lower aspect ratio of the at least one element (60) than that of the component (50, 55).

2. The method (200) of claim 1, wherein the at least one element (60) is removably coupled to the component (50, 55).

3. The method (200) of claim 1, wherein the at least one element (60) is fixedly coupled to the component (50, 55).

4. The method (200) of claim 1, wherein the at least one element (60) is integral with the component (50), such that the at least one element (60) extends from the component (50).

5. The method (200) of any preceding claim, wherein the at least one element (60) provides a higher attenuation of the imaging beam (110) than the component (50, 55).

6. The method (200) of any preceding claim, wherein the at least one element (60) and the component (50) are made of the same material.

7. The method (200) of any one of claims 1 to 5, wherein the at least one element (60) comprises a single magnetic element.

8. The method (200) of any one of claims 1 to 5, wherein the one or more regions of interest (52, 57) of the component (50, 55) comprise a first region of interest (52A, 57A) and a second region of interest (52B, 57B) opposite to the first region of interest (52A, 57A).

9. The method (200) of claim 8, wherein the at least one element (60) comprises a first magnetic element (60A) disposed adjacent to and at least partially engaging the first region of interest (52A), and a second magnetic element (60B) disposed adjacent to and at least partially engaging the second region of interest (52B), and the method optionally further comprising determining a shortest distance (d2) between the first magnetic element (60A) and the second magnetic element (60B) in a scanned image to calculate a dimension (d1) of the component (50) between the first region of interest (52A) and the second region of interest (52B).

10. The method (200) of claim 8, wherein the at least one element (60) comprises a magnetic element (60C) disposed adjacent to and at least partially engaging the first region of interest (52A), and a metallic element (60D) disposed adjacent to and at least partially engaging the second region of interest (52B), wherein the metallic element (60D) is configured to be attracted by the magnetic element (60C), and the method optionally further comprising determining a shortest distance (d3) between the magnetic element (60C) and the metallic element (60D) in a scanned image to calculate a dimension (d1) of the component (50) between the first region of interest (52A) and the second region of interest (52B).

11. The method (200) of claim 8, wherein the at least one element (60) comprises a magnetic element (60C) disposed adjacent to and at least partially engaging the first region of interest (57A), and a magnetic fluid (60F) contacting the second region of interest (57B), and the method optionally further comprising determining a shortest distance (d4) between the magnetic element (60C) and the magnetic fluid (60F) in a scanned image to calculate a dimension (d5) of the component (55) between the first region of interest (57A) and the second region of interest (57B).

12. The method (200) of any one of claims 8 to 12, wherein the first region of interest (52A, 57A) is a first edge (E1, E1') of the component (50, 55), and the second region of interest (52B, 57B) is a second edge (E2, E2') of the component (50, 55) opposite to the first edge (E1, E1') of the component (50, 55).

13. The method (200) of any preceding claim, further comprising applying a contrast agent (56) to the at least one element (60), wherein a material of the contrast agent (56) has an attenuation coefficient (C1) that is greater than an attenuation coefficient (C2) of a material of the component (50, 55).

14. The method (200) of any preceding claim, wherein the imaging beam source (108) is an electromagnetic source, such as an x-ray source or a gamma-ray source.

15. The method (200) of any preceding claim, wherein the component (50) is a component of a gas turbine engine (10).
